Europäisches Patentamt

European Patent Office

Office européen des brevets

(11) Veröffentlichungsnummer: **0 217 078**
**A1**

## (12) EUROPÄISCHE PATENTANMELDUNG

(21) Anmeldenummer: 86110972.6

(51) Int. Cl.4: **B60B 21/10**

(22) Anmeldetag: 08.08.86

(30) Priorität: 31.08.85 DE 3531177

(43) Veröffentlichungstag der Anmeldung:
08.04.87 Patentblatt 87/15

(84) Benannte Vertragsstaaten:
AT BE CH DE FR GB IT LI LU NL SE

(71) Anmelder: **Continental Gummi-Werke Aktiengesellschaft**
**Königsworther Platz 1 Postfach 169**
**D-3000 Hannover 1(DE)**

(72) Erfinder: **Frerichs, Udo**
**Buchenweg 7**
**D-3012 Langenhagen 8(DE)**
Erfinder: **Rach, Heinz-Dieter**
**Planetenring 32**
**D-3008 Garbsen 1(DE)**

(54) **Luftbereiftes Fahrzeugrad.**

(57) Die Erfindung bezieht sich auf ein luftbereiftes Fahrzeugrad mit einer starren Felge (5), die sich im wesentlichen nach radial innen erstreckende Felgenhörner (7) aufweist, die weiterhin radial außen mit einem Tiefbett (9) und radial innen mit je einem Hochbett (10) versehen ist, und mit einem Fahrzeugluftreifen (1), der mit seinen Wülsten (3) auf der radial inneren Seite (6) der Felge neben den Felgenhörnern (7) befestigt ist. Zur Stützflächenvergrößerung wird vorgeschlagen, daß das Tiefbett der Felge (9) durch einen ringförmigen Stützkörper (14) überbrückt ist und daß der Stützkörper (14) als exakter oder leicht gewölbter Zylinderring ausgebildet ist.

FIG. 1

EP 0 217 078 A1

## Luftbereiftes Fahrzeugrad

Die Erfindung betrifft ein luftbereiftes Fahrzeugrad mit einer starren Felge, die sich im wesentlichen nach radial innen erstreckende Felgenhörner aufweist, die weiterhin radial außen mit einem Tiefbett und radial innen mit je einem Hochbett versehen ist, und mit einem Fahrzeugluftreifen, der mit seinen Wülsten auf der radial inneren Seite der Felge neben den Felgenhörnern befestigt ist.

Ein solches Fahrzeugrad wird z. B. in der DE-OS 30 00 428 beschrieben. Es eignet sich unter anderem besonders gut für einen sogenannten Pannenlauf, weil bei einem auftretenden Luftverlust der Reifen sich mit seiner Innenwand auf Stützflächen des Felgenkranzes abstützen und ungehindert seitlich ausbiegen kann, ohne daß sich Knickstellen bilden. In der DE-OS 30 19 742 und in der DE-OS 31 45 252 werden Abwandlungen des bekannten Fahrzeugrades dahingehend vorgeschlagen, daß unter Verzicht auf ein radial äußeres Teifbett die Stützflächen des Felgenkranzes entscheidend vergrößert werden. Es hat sich jedoch gezeigt, daß Felgen mit einem nahezu zylindrischen Felgenkranze bei gleicher Wandstärke nicht die Stabilität einer Teifbettfelge aufweisen.

Der Erfindung liegt deshalb die Aufgabe zugrunde, ein Fahrzeugrad der eingangs genannten Art anzugeben, bei dem eine Stützflächenvergrößerung unter Aufrechterhaltung der Stabilitätseigenschaften einer Tiefbettfelge erzielt wird.

Diese Aufgabe wird erfindungsgemäß dadurch gelöst, daß das Tiefbett der Felge durch einen ringförmigen Stützkörper überbrückt ist und daß der Stützkörper als exakter oder leicht gewölbter Zylinderring ausgebildet ist.

Mit der Erfindung wird nicht nur eine Verbreiterung der Stützflächen erzielt, sondern es ergibt sich darüber hinaus der Vorteil einer Vergößerung des Stützflächendurchmessers, woraus höhere Laufleistungen bei einem Pannenlauf resultieren. Bei breiten Felgen und Reifen und einem lösbar angebrachten Stützkörper erhält man den Vorteil einer leichteren Reifenmontagemöglichkeit, weil das radial äußere Tiefbett in üblicher Weise zum Einbringen der Felge in den Innenraum des Reifens eingesetzt werden kann. Schließlich ist als Vorteil zu nennen, daß die Seitenwändedes Tiefbetts gleichzeitig als Anschläge für Füllringe dienen können, die die am radial inneren Umfang der Felge befindlichen Hochbetten bedecken.

Vorteilhafte Ausgestaltungen der Erfindung sind den Unteransprüchen zu entnehmen.

Nachfolgend werden mehrere Ausführungsbeispiele der Erfindung anhand einer Zeichnung erläutert.

Es zeigt

Fig. 1 ein Fahrzeugrad mit einem Stützkörper, der das Felgentiefbett überbrückt und auf den seitlichen Stützflächen aufliegt, in einem radialen Teilschnitt,

Fig. 2 die Felge des Fahrzeugrads gemäß Fig. 1, jedoch mit einem Stützkörper, der radial außen bündig mit den seitlichen Stützflächen des Felgenkranzes abschließt und am Felgenkranz angeschweißt ist, in einem radialen Teilschnitt,

Fig. 3 eine Tiefbettfelge mit einem Felgenkranz, der an den radial äußeren Tiefbetträndern Auflageflächen für den Stützkörper aufweist und mit einem aufliegenden Stützkörper, der radial außen wiederum bündig mit dem übrigen Felgenkranz abschließt, in einem radialen Teilschnitt,

Fig. 4 die Felge der Fig. 1, jedoch mit einem Stützkörper, der mit seitlichen Führungsstegen versehen ist, in einem radialen Teilschnitt,

Fig. 5 einen Ausschnitt einer Felge mit einem Stützkörper, der Ausnehmungen zum Luftdurchtritt aufweist, in einem radialen Teilschnitt,

Fig. 6 die Felge der Fig. 5 in einem Schnitt in der Ebene VI -VI

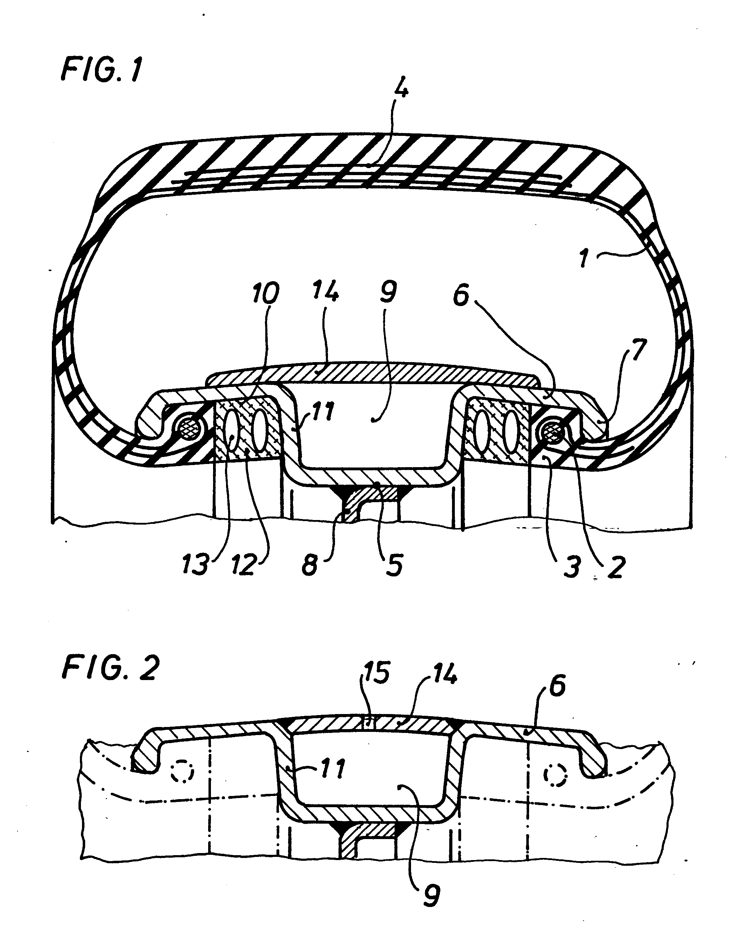

Beim Fahrzeugrad der Fig. 1 ist ein Gürtelreifen mit einer Radialkarkasse 1, die mit ihren Rändern durch Umschlingen der Wulstkerne 2 in den Wülsten 3 verankert ist, und mit einem üblichen Gürtel 4 derart auf einer Felge 5 montiert, daß die Wulstsitzflächen sich auf radial innen vom Felgenkranz 6 gelegenen Sitzflächen neben den nach radial innen sich erstreckenden Felgenhörnern 7 befinden. Der Felgenkranz 6 ist an einer Felgenschüssel 8 befestigt. Die Felge 5 weist auf der radial äußeren Seite ein Mittentiefbett 9 und auf der radial inneren Seite seitlich gelegene Montagehochbetten 10 auf, die von den im wesentlichen senkrechten Wänder 11 des Felgenkranzes 6 nach axial innen hin begrenzt werden. Die Räume zwischen den Reifenwülsten 3 und den Wänden 11 können mit Abdeckringen 12 ausgefüllt sein, die zur Gewichtseinsparung zweckmäßigerweise mit Hohlräumen 13 versehen sind.

Das radial äußere Tiefbett 9 wird von einem Stützkörper 14 überbrückt, der im wesentlichen als zylinderförmiger, mittig leicht nach außen gewölbter Stützring ausgebildet ist und der auf den seitlichen Teilen des Felgenkranzes 6 aufliegt. Der Stützkörper kann aus einem Metall oder aus Kunststoff hergestellt sein und er kann am Felgenkranz 6 angeklebt, aufgeschrumpft oder in sonstiger Weise befestigt sein. Weiterhin kann er in Umfangsrichtung einteilig oder mehrteilig ausgebildet sein. Bei einem mehrteiligen Stützkörper 14 ist es möglich, die einteilige Felge 5 unter zur Hilfenahme des Tiefbetts 9 in den Innenraum des Reifens einzubringen und den Stützkörper 14 erst anschließend zu montieren. Bei einem einteiligen Stützkörper 14 gibt es einen maximalen radial äußeren Durchmesser, bei dem eine Reifenmontage gerade noch möglich ist. Die diesbezüglichen Dimensionierungen können z. B. der DE-OS 33 41 043 entnommen werden.

Beim Beispiel der Fig. 2 ist der Stützkörper 14 unlösbar mit den seitlichen Teilen des Felgenkranzes 6 verbunden, z.B. durch Verschweißen mit den seitlichen Wänden 11 des Tiefbetts 9. Es ist besonders günstig, den Durchmesser des Stützkörpers 14 derart zu wählen, daß die seitlichen Stützflächen des Felgenkranzes 6 ohne Absatz in die Stützfläche des Stützkörpers 14 übergehen, so daß man eine optimale Stützfläche für einen Pannenlauf erhält. Weiterhin wird durch das Verschweißen des Stützkörpers 14 mit dem Felgenkranz 6 eine nochmals verbesserte Versteifung der Felge 5 erzielt. Im Stützkörper 14 befinden sich Bohrungen 15 für einen Luftdurchtritt.

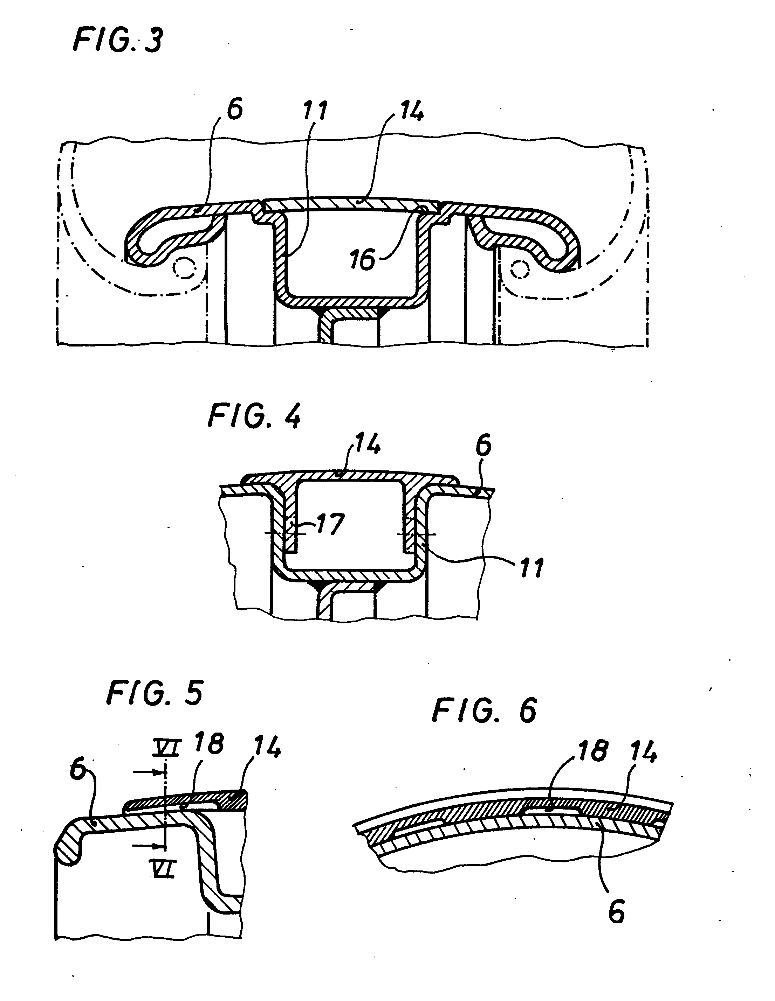

Bei der Felge der Fig. 3 sind die seitlichen Teile des Felgenkranzes 6 beim Übergang zu den Teifbettwänden 11 nach radial innen versetzt, so daß sich Auflageflächen 16 für den Stützförper 14 ergeben. Radial außen schließt der Stützkörper 14 wiederum bündig mit den seitlichen Teilen des Felgenkranzes 6 ab. Der Stützkörper 14 besteht in Umfangsrichtung aus zumindest zwei, bevorzugt jedoch mehreren Teilen, die mit ihren Rändern aneinanderstoßen.

Fig. 4 zeigt einen Ausschnitt der Felge gemäß Fig. 1 mit einem Stützkörper 14, der wiederum auf den seitlichen Teilen des Felgenkranzes 6 aufliegt, der jedoch zusätzlich seitliche Führungsstege 17 aufweist, die seitliche Verschiebungen des Stützfkörpers 14 verhindern und die zur Befestigung des Stützkörpers 14 an den Wänden 11 dienen können.

In Fig. 5 ist ein Ausschnitt der Felge der Fig. 1 dargestellt, bei der wiederum ein Stützkörper 14 auf den seitlichen Teilen des Felgenkranzes 6 aufliegt. Um einen ungehinderten Luftdurchtritt in den Reifeninnenraum zu gewährleisten, ist der Stützkörper 14 mit Ausnehmun gen 18 versehen, die in Umfangsrichtung mit Abstand zueinander angeordnet sind. Fig. 6 stellt einen Schnitt durch den Felgenkranz 6 und den Stützkörper 14 der Fig. 5 in der Ebene VI -VI dar.

Bei den vorstehend beschriebenen Beispielen können die im wesentlichen senkrecht verlaufenden Wände 11 gleichzeitig als stabile Anschläge für Abdeckringe 12 verwendet werden, wenn diese zusätzlich eine Klemmfunktion übernehmen sollen, um seitliche Verschiebungen der beiden Wülste 3 zu verhindern.

## Ansprüche

1. Luftbereiftes Fahrzeugrad mit einer starren Felge, die sich im wesentlichen nach radial innen erstreckende Felgenhörner aufweist, die weiterhin radial außen mit einem Tiefbett und radial innen mit je einem Hochbett versehen ist, und mit einem Fahrzeugluftreifen, der mit seinen Wülsten auf der radial inneren Seite der Felge neben den Felgenhörnern befestigt ist, dadurch gekennzeichnet, daß das Tiefbett (9) der Felge (5) durch einen ringförmigen Stützkörper (14) überbrückt ist und daß der Stützkörper (14) als exakter oder leicht gewölbter Zylinderring ausgebildet ist.

2. Fahrzeugrad nach Anspruch 1, dadurch gekennzeichnet, daß der Stützkörper (14) an seinen Rändern einen Durchmesser aufweist, der höchstens dem dortigen Felgendurchmesser plus der doppelten Wandstärke des Stützkörpers (14) entspricht.

3. Fahrzeugrad nach Anspruch 1, dadurch gekennzeichnet, daß der Stützkörper (14) einteilig ausgebildet ist.

4. Fahrzeugrad nach Anspruch 1, dadurch gekennzeichnet, daß der Stützkörper (14) aus mehreren Teilen besteht.

5. Fahrzeugrad nach Anspruch 1, gekennzeichnet durch einen Stützkörper (14) aus Metall oder Kunststoff.

6. Fahrzeugrad nach Anspruch 1, dadurch gekennzeichnet, daß der Stützkörper (14) derart im Tiefbett (9) angeordnet ist, daß er außen mit den seitlichen Teilen des Felgenkranzes (6) eine gemeinsame Stützfläche bildet..

7. Fahrzeugrad nach Anspruch 1, dadurch gekennzeichnet, daß der Stützkörper (14) auf der radial inneren Seite Führungsstege (17) aufweist.

8. Fahrzeugrad nach Anspruch 1, dadurch gekennzeichnet, daß der Stützkörper (14) mit Ausnehmungen (18) zum Durchtritt von Luft versehen ist.

FIG.1

4

1

10  14  9  6

7

11

13  12  8  5  3  2

FIG. 2

15  14  6

11

9

Continental
Gummi – Werke AG
Hannover

85 – 61 P

FIG. 3

6   11   14

16

FIG. 4

14   6

17   11

FIG. 5

6   Ⅵ   18   14

Ⅵ

FIG. 6

18   14

6

Continental
Gummi – Werke AG
Hannover

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 161 410 (ALFRED SMITH)<br><br>* Figur 1 *<br><br>--- | 1,3,5,7 | B 60 B 21/10 |
| A,D | DE-C-3 000 428 (CONTINENTAL GUMMI-WERKE AG)<br>* Figuren 1,2 *<br><br>--- | 1 | |
| A,D | DE-C-3 019 742 (CONTINENTAL GUMMI-WERKE)<br>* Figur 1 *<br><br>--- | 1 | |
| A | EP-A-0 079 454 (CONTINENTAL GUMMI-WERKE)<br>* Figuren * & DE-A-3 145 252 (Kat. D)<br><br>--- | 1 | |
| A | EP-A-0 142 115 (CONTINENTAL GUMMI-WERKE)<br>* Figur 6 * & DE-A-3 341 043 (Kat. D)<br><br>--- | 1 | **RECHERCHIERTE SACHGEBIETE (Int. Cl.4)**<br><br>B 60 B<br>B 60 C |
| A,P | EP-A-0 168 688 (CONTINENTAL GUMMI-WERKE)<br>* Figuren 4-6 *<br><br>----- | 1 | |

Der vorliegende Recherchenbericht wurde für alle Patentansprüche erstellt.

| Recherchenort | Abschlußdatum der Recherche | Prüfer |
|---|---|---|
| DEN HAAG | 24-11-1986 | FOGLIA A. |